(19) Europäisches Patentamt

European Patent Office

Office européen des brevets

(11) Veröffentlichungsnummer: **0 447 570 B1**

(12) **EUROPÄISCHE PATENTSCHRIFT**

(45) Veröffentlichungstag der Patentschrift: **22.12.93**

(21) Anmeldenummer: **90104738.1**

(22) Anmeldetag: **13.03.90**

(51) Int. Cl.⁵: **B29C 45/50**

(54) **Elektromechanischer Vorschubantrieb für eine Plastifizierschnecke einer Kunststoffspritzgiessmaschine.**

(43) Veröffentlichungstag der Anmeldung:
**25.09.91 Patentblatt 91/39**

(45) Bekanntmachung des Hinweises auf die
Patenterteilung:
**22.12.93 Patentblatt 93/51**

(84) Benannte Vertragsstaaten:
**AT BE CH DE FR GB IT LI**

(56) Entgegenhaltungen:
**EP-A- 0 090 863**
**EP-A- 0 247 208**
**DE-C- 682 116**

**PATENT ABSTRACTS OF JAPAN, Band 10,**
**Nr. 167 (M-488)[2223], 13. Juni 1986;& JP-A-61**
**19 326 (FANUC K.K.) 28-01-1986**

(73) Patentinhaber: **SIEMENS AKTIENGESELL-
SCHAFT
Wittelsbacherplatz 2
D-80333 München(DE)**

(72) Erfinder: **Breuer, Peter, Dipl.-Inform.
Benediktusstrasse 17
D-5100 Aachen(DE)**
Erfinder: **Giessmann, Michael
Amselweg 8
D-4156 Willich 2(DE)**
Erfinder: **Lauterbach, Martin, Dipl.-Ing.
Nizzaallee 47
DE-5100 Aachen(DE)**
Erfinder: **Philipp, Markus, Dipl.-Ing.
Düsseldorfer Strasse 73
D-4010 Hilden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen elektromechanischen Vorschubantrieb für eine Plastifizierschnecke einer Kunststoffspritzgießmaschine, bestehend aus einem Elektromotor und einem mechanischen Umsetzungsgetriebe.

Aus der EP 0 090 863 A1 ist eine Kunststoffspritzgießmaschine bekannt, bei der mittels eines Servomotors die Schließeinheit, die Rotation der Plastifizierschnecke und die translatorische Bewegung der Plastifizierschnecke angetrieben wird. Die bewegliche Werkzeugplatte der Schließeinheit wird mittels einer Kugelgewindespindel und eines Getriebes in axialer Richtung verschoben. Zwischen Antriebswelle des Servomotors und Abtriebswelle der Schließeinheit sind eine Bremse und eine Kupplung angeordnet. Auf der Antriebswelle sind jeweils eine Kupplung für die Rotation und für die Translation der Plastifizierschnecke angebracht. Außerdem ist jeweils ein Getriebe vorgesehen. Die Translation der Plastifizierschnecke erfolgt ebenfalls mittels einer Kugelgewindespindel, die die Umdrehungsgeschwindigkeit des Servomotors in eine translatorische Bewegung umsetzt, wobei eine Führungsstange und ein Antriebszahnrad des Getriebes für die Rotation der Plastifizierschnecke die Führung übernimmt.

Aus der EP 0 247 208 A1 ist ebenfalls eine Kunststoffspritzgießmaschine mit einem elektromechanischen Vorschubantrieb bekannt. Dieser Vorschubantrieb besteht aus zwei Kugelgewindespindeln, einer Druckplatte, einer Rückplatte, einer Phasenkonstanz-Zahnradanordnung und zweier Servomotoren. Diese Servomotoren treiben jeweils eine Kugelgewindespindel an, die zwischen einer Front- und der Rückplatte gelagert sind. Das rückwärtige Ende der Plastifizierschnecke ist mit einer Druckplatte verbunden, die mittels Kugelmuttern mit den Kugelgewindespindeln verbunden ist. Damit die Kugelgewindespindeln sich phasenstarr zueinander bewegen, ist eine Zahnradanordnung, bestehend aus drei Zahnrädern, vorgesehen. Nur einer der beiden Servomotoren ist mit einer Lageerfassung ausgestattet, deren Signale einer Steuereinheit zugeführt sind. Die Servomotoren werden von einem Umrichter gespeist, der aus einem netzseitigen Gleichrichter, einem Spannungszwischenkreis und zweier Transistor-Wechselrichter besteht.

Gewindespindel mit passender Spindelmutter sind konstruktiv als Gleit- oder Wälzpaarung (Kugelgewindespindel) ausgeführt. Um die im Spindeltrieb auftretenden Leistungsverluste so gering wie möglich zu halten, wird als Ausführungsform die Wälzpaarung ausgewählt. Die Umrechnung von Spindeldrehzahl in Spindelmutter- und damit auch Schneckenvorlaufgeschwindigkeit ist linear abhängig von der Spindelsteigung. Das zur Aufbringung einer Axialkraft benötigte Antriebsmoment ist abhängig vom Spindelradius, Steigungswinkel und Reibzahl. Beim Ansetzen von Minimalanforderungen einer Kunststoffspritzgießmaschine ($p_{max}$ = 1.300 bar, $v_{smax}$ = 0,1 m/s) und Auswahl einer günstigen Spindel (D = 32 mm, s = 5mm/U) liegt der Wert vom Antriebsmoment über dem von handelsüblichen Servomotoren. Außerdem besitzen diejenigen Spindelmuttern, die eine für die Drehmoment-Axialkraftübertragung günstige niedrige Steigung aufweisen, auch nur eine geringe dynamische Tragzahl. Damit wird deutlich, daß eine direkte Umsetzung von Motordrehzahl in Schneckenvorschubbewegung über eine Kugelgewindespindel unter Vorgabe der genannten Minimal-Anforderung einer Kunststoffspritzgießmaschine unter Verwendung von handelsüblichen Servomotoren ($M_{Amax}$ = 18 ÷ 60 Nm, $P_{inst}$ = 10,8 ÷ 12 kW, $m_M$ = 21 - 75 kg) technisch nicht realisierbar ist. Läßt sich die benötigte Vorschubgeschwindigkeit realisieren, so ist die erzielbare Axialkraft durch die vorgegebenen Anforderungen bei weitem nicht ausreichend.

Aus der Zeitschrift "Kunststoffe", Band 70, 1980, Heft 12, Seiten 821 bis 825 ist eine Kniehebelschließeinheit für eine Kunststoffspritzgießmaschine bekannt. Die Kniehebelschließeinheit besteht aus einem Fünf-Punkt-Kniehebel (Doppelkniehebel) mit/ohne Schnellfahrzylinder, einer düsenseitigen Werkzeugplatte, einer beweglichen Werkzeugplatte, Werkzeugen und einem Schließzylinder. Der Schließkolben bewegt über das Kniehebelgetriebe die bewegliche Werkzeughälfte in Richtung der feststehenden Platte. Dabei bleibt die an der beweglichen Werkzeugplatte angreifende Vortriebskraft nicht konstant, da sich die Kniehebelübersetzung mit dem Hub kontinuierlich ändert. Diese variable Kniehebelübersetzung führt aus massendynamischen Gründen zu einer selbsttätigen Geschwindigkeitsreduzierung im letzten Teil des Hubes, so daß in der Regel auch ohne Bremsung eine beherrschbare Auftrittsgeschwindigkeit erreicht wird. Sobald sich die Werkzeughälften berühren, wird der Schließkolben mit Hochdruck beaufschlagt. Die dabei erzeugte Kraft wird wiederum durch das Kniehebelgetriebe stellungsabhängig übersetzt und auf die bewegliche Werkzeugplatte übertragen. Beim Schließvorgang wird Kraft benötigt, um zu Beginn des Verfahrvorgangs die Werkzeughälften zu beschleunigen, und um die Werkzeughälften beim Einspritzvorgang zusammenzuhalten.

Der Erfindung liegt nun die Aufgabe zugrunde, einen elektromechanischen Vorschubantrieb für eine Plastifizierschnecke einer Kunststoffspritzgießmaschine anzugeben, wobei mittels eines handelsüblichen Servomotors und eines Umsetzungsgetriebes die charakteristischen Eigenheiten eines Bewegungsablaufs eines Spritz- und Plastifizieraggregates einer Kunststoffspritzgießmaschine erfüllt werden.

Diese Aufgabe wird gemäß Anspruch 1 dadurch gelöst, daß als mechanisches Umsetzungsgetriebe ein ungleichförmiger Zweifachkniehebel mit einem Übersetzungsverhältnis

$$i_K(s) = \cfrac{1}{\tan\alpha + \left(\cfrac{((a-b)-l_2\sin\alpha)}{l_1} \cdot \left(\sqrt{1-\left(\cfrac{(a-b)-l_2\sin\alpha}{l_1}\right)^2}\right)^{-1}\right)}$$

wobei

$(a - b)$ = projizierter Abstand der Abstützpunkte des Kniehebels zueinander,
$\alpha$ = Schließwinkel
$l_1$ = Länge des langen Kniehebelarms,
$l_2$ = Länge des kurzen Kniehebelarms

vorgesehen ist, deren lange Kniehebelarme sich am Gehäuse der Kunststoffspritzgießmaschine und deren kurze Kniehebelarme sich an der Plastifizierschnecke abstützen und die beiden Gelenke jeweils über eine Spindelmutter mit einer mittels eines Tragrahmens beidseitig gelagerten Doppel-Kugelgewindespindel mit gegenläufigem Gewinde verbunden sind, wobei die Doppel-Kugelgewindespindel mittels eines Drehstromservomotors angetrieben wird.

Durch die Verwendung eines Zweifachkniehebels als Umsetzungsgetriebe können mittels handelsüblicher Servomotoren die Anforderungen bei der Herstellung von Spritzgießteilen erfüllt werden, d.h., die Motordrehzahl wird direkt in die Schneckenvorschubgeschwindigkeit umgesetzt, wobei eine benötigte Vorschubgeschwindigkeit und eine benötigte Axialkraft bzw. ein Antriebsmoment bereitgestellt wird. Außerdem verbessert sich die Genauigkeit und die Reproduzierbarkeit der Vorschubbewegung, wodurch sich die Qualität des fertigenden Produktes verbessert.

Das Übersetzungsverhältnis bzw. die Kniehebelcharakteristik ist eine Funktion von drei unabhängigen Variablen, nämlich der projizierte Abstand der Abstützpunkte der Kniehebel zueinander, die Länge des langen Kniehebelarms und die Länge des kurzen Kniehebelarms. Durch die Veränderung der einzelnen Variablen ändert sich das Übersetzungsverhältnis. Damit wird deutlich, daß aufgrund der zahlreichen Variationsmöglichkeiten, die bei dem Entwurf von Kniehebelsystemen denkbar sind, geeignete Randbedingungen festgelegt werden müssen, um diese Vielfalt zu begrenzen. Das Übersetzungsverhältnis des Zweifachkniehebels ist in Abhängigkeit eines Verschiebeweges bzw. eines Hubes durch das Geschwindigkeitsübersetzungsverhältnis und durch ein Kraftübersetzungsverhältnis begrenzt. Dabei sollte die Kniehebelcharakteristik die Geschwindigkeitsübersetzung nicht überschreiten, da sonst bei vorgegebener Antriebsgeschwindigkeit (Vorschubgeschwindigkeit) die erforderliche Antriebsgeschwindigkeit die maximale Drehzahl überschreiten würde. Außerdem sollte die Kniehebelcharakteristik das Kraftübersetzungsverhältnis nicht unterschreiten, da sonst die Antriebsleistung des Servomotors zur Aufbringung des erforderlichen Drehmoments nicht ausreicht.

Bei einer vorteilhaften Ausführungsform des elektromechanischen Vorschubantriebs einer Plastifizierschnecke einer Kunststoffspritzgießmaschine ist zwischen der Doppel-Kugelgewindespindel und dem Drehstromservomotor ein zusätzliches Getriebe vorgesehen. Durch die Verwendung eines zusätzlichen Getriebes kann die Spindelauslegung freier vorgenommen werden, da dann ein gefordertes Übersetzungsverhältnis entlang des Hubes bzw. Verschiebeweges der Plastifizierschnecke nicht mehr über den Zweifachkniehebel allein aufgebracht werden muß. Dadurch kann die Geometrie und dadurch die Baugröße der Kunststoffspritzgießmaschine klein gehalten werden.

Wenn man als zusätzliches Getriebe einen Riemenantrieb (Zahn- oder Keilriementrieb) vorsieht, kann man nachträglich die maximale Einspritzgeschwindigkeit (Schneckenvorlaufgeschwindigkeit) erhöhen, wenn in der Einspritzphase die Leistungsreserven des Servomotors noch nicht ausgeschöpft sind. Für die Änderung des Gesamtübersetzungsverhältnisses brauchen dann nur die Riemräder des Zusatzgetriebes ausgetauscht werden, ohne dabei die Kniehebelgeometrie verändern zu müssen.

Bei einer weiteren vorteilhaften Ausführungsform des elektromechanischen Vorschubantriebes einer Plastifizierschnecke einer Kunststoffspritzgießmaschine ist der Drehstromservomotor am Tragrahmen befestigt. Dadurch wird die Baugröße des Vorschubantriebes nicht vergrößert. Als Drehstrommotor ist ein Motor mit hoher Drehzahl, geringem Gewicht, geringem Massenträgheitsmoment und hoher zulässiger Überlastung vorgesehen. Ein solcher Motor beansprucht wenig Platz und belastet den Tragrahmen nur wenig, wodurch der Tragrahmen in der Baugröße räumlich geringer gehalten werden kann.

EP 0 447 570 B1

Bei einer besonders vorteilhaften Ausführungsform des elektromechanischen Vorschubantriebes einer Plastifizierschnecke besteht jeweils der lange Kniehebelarm des Zweifachkniehebels aus zwei räumlich parallel beabstandeten Kniehebelarmen. Diese Konstruktion hat den Vorteil, daß der kurze Kniehebelarm bei genügend großem Zwischenraum der beiden Kniehebelarme des langen Kniehebelarmes im beliebigen Winkel verfahren werden kann. D.h., beide Kniehebelarme eines Kniehebels können sich kreuzen, um den notwendigen Verschiebeweg zu erbringen. Durch die Aufteilung des langen Kniehebelarmes auf zwei räumlich beabstandete parallele Kniehebelarme vereinfacht sich die Lagerung des langen Kniehebelarmes am Gehäuse der Kunststoffspritzgießmaschine derart, daß auf die Lager auftretende Kräfte sich gegenseitig aufheben. Außerdem verteilt sich die Belastung des langen Kniehebelarmes auf zwei parallel geführte Kniehebelarme, wodurch sich die Kniehebelkonstruktion vereinfacht.

Zur weiteren Erläuterung der Erfindung wird auf die Zeichnung Bezug genommen, in der eine Ausführungsform des elektromechannischen Vorschubantriebes einer Plastifizierschnecke einer Kunststoffspritzgießmaschine schematisch veranschaulicht ist.

| | |
|---|---|
| Figur 1 | zeigt eine Plastifizierschnecke mit elektromechanischem Vorschubantrieb, in |
| Figur 2 | ist die Vorschubgeschwindigkeit in einem Diagramm über der Zeit dargestellt, in |
| Figur 3 | ist der Druck in einem Diagramm über der Zeit veranschaulicht, in |
| Figur 4 | ist der Verschiebeweg (Hub) der Plastifizierschnecke in einem Diagramm über der Zeit dargestellt, |
| Figur 5 | zeigt die Geometrie eines Kniehebels des erfindungsgemäßen Zweifachkniehebels, in den |
| Figuren 6 bis 8 | ist die jeweils das Übersetzungsverhältnis $i_K$ des Zweifachkniehebels in einem Diagramm über dem Schließwinkel $\alpha$ aufgetragen, wobei sich die Länge $l_1$ des langen Kniehebelarmes, die Länge $l_2$ des kurzen Kniehebelarmes und der projizierte Abstand $(a - b)$ ändern, in |
| Figur 9 | sind die Grenzkurven (Geschwindigkeitsübersetzungsverhältnis, Kraftübersetzungsverhältnis) und die Gesamtcharakteristik vom Zweifachkniehebel mit Zusatzgetriebe in einem Diagramm über einem normierten Verschiebeweg s* dargestellt, in |
| Figur 9a | ist eine Grenzkurve (Geschwindigkeitsübersetzungsverhältnis) mit einem nichtzulässigen Bereich in einem Diagramm über einem normierten Verschiebeweg s* dargestellt, in |
| Figur 9b | ist eine Grenzkurve (Kraftübersetzungsverhältnis) mit einem nichtzulässigen Bereich in einem Diagramm über einem normierten Verschiebeweg s* veranschaulicht und |
| Figur 10 | veranschaulicht den Hub des verschiebbaren Komplexes Drehstromservomotor-Getriebe-Gewindespindel. |

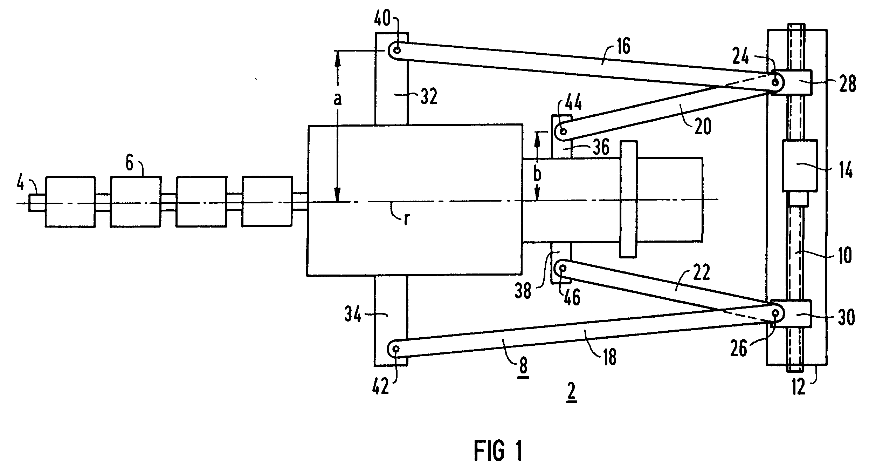

In Figur 1 ist ein elektromechanischer Vorschubantrieb 2 für eine Plastifizierschnecke 4 einer nicht näher dargestellten Kunststoffspritzgießmaschine dargestellt. Die Plastifizierschnecke 4 fördert durch eine Rotationsbewegung den Kunststoff in Richtung einer feststehenden Werkzeugplatte einer Schließeinheit der Kunststoffspritzgießmaschine. In ihrem ersten Bereich zieht die Schnecke 4 den Rohstoff, der meistens in Granulatform vorliegt, ein und fördert ihn zur Umwandlungszone. Hier wird er verdichtet und plastifiziert mittels Heizelemente 6. In der letzten Zone wird der Rohstoff weiter homogenisiert und vor die Schnecke 4 gefördert. Durch den dabei entstehenden Staudruck wird die Plastifizierschnecke 4 zurückgeschoben. Beim anschließenden Einspritzen der Schmelze in die Spritzgießform dient sie als Kolben. Die translatorische Bewegung der Plastifizierschnecke 4 wird mittels des elektromechanischen Vorschubantriebes 2 bewerkstelligt.

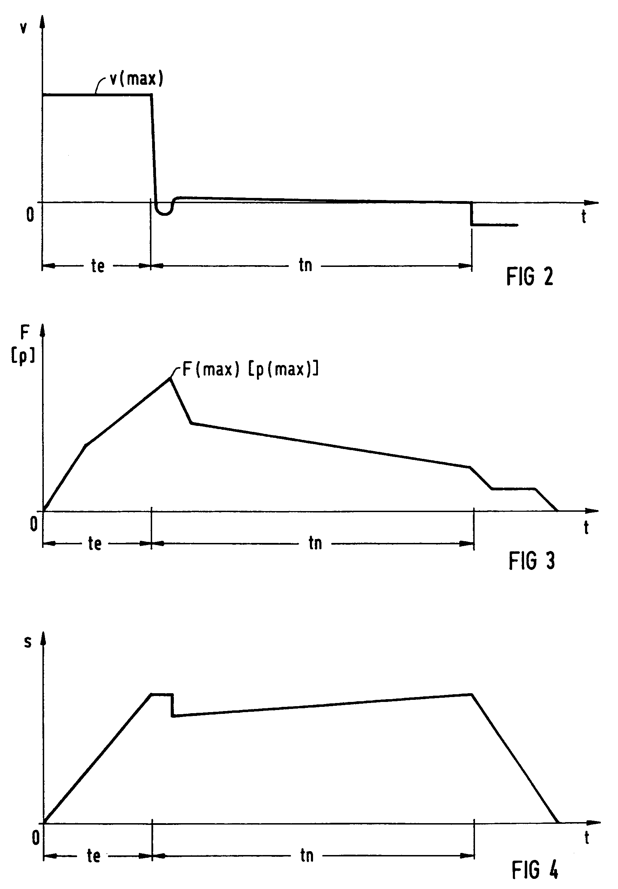

Der Vorschubantrieb 2 soll möglichst schnell sein, damit z.B. die Spritzgießform gut angefüllt und wenig Zeit benötigt wird. Diese hohe Schnelligkeit kann nur mit sehr großen Kräften erreicht werden. Kraft- und Geschwindigkeitsbedarf ändern sich während des Einspritzvorgangs. Zu Beginn ist der Gegendruck relativ gering und es soll möglichst viel Kunststoff eingespritzt werden. Gegen Ende des Vorgangs und während der Nachdruckphase ist eine geringe Geschwindigkeit bei hohem Druck gefordert. Für das Zurückfahren der Schnecke 4 sind vom Antrieb 2 her keine großen Kräfte erforderlich, was zu einer teilweisen vereinfachten Konstruktion des Kniehebelantriebes 2 führt. In den Figuren 2 bis 4 sind die Geschwindigkeit $v_s$, die Kraft F bzw. der Druck P und der Verschiebeweg s des Prozesses jeweils in eiem Diagramm über der Zeit t aufgetragen.

Der elektromechanische Vorschubantrieb 2 besteht aus einem Zweifachkniehebel 8, einer Doppel-Kugelgewindespindel 10, einem verschiebbaren Tragrahmen 12 und einem Drehstromservomotor 14. Die Doppel-Kugelgewindespindel 10 mit gegenläufigem Gewinde ist im Tragrahmen 12 beidseitig gelagert. Der Drehstromservomotor 14 treibt die Doppel-Kugelgewindespindel 10 direkt oder mittels eines Zusatzgetriebes an. Als Zusatzgetriebe ist ein Zahn- oder Keilriementrieb vorgesehen. Die Doppel-Kugelgewindespindel

4

10 führt die symmetrisch angeordneten Kniehebelarme 16, 20 bzw.18, 22, wobei die Gelenke 24 und 26 der beiden Kniehebel 16, 20 und 18, 22 mit der Gewindespindel 10 mittels einer Spindelmutter 28 und 30 bzw. einem Spindeladapter verbunden sind. Die dem Gelenk 24 bzw. 26 abgewandten Enden des langen Kniehebelarms 16 bzw. 18 und des kurzen Kniehebelarms 20 bzw. 22 sind an Traversen 32 bzw. 34 und 36 bzw. 38 mittels Lager 40 bzw. 42 und 44 bzw. 46 gelagert. Die Traversen 32 und 34 sind am Gehäuse der Kunststoffspritzgießmaschine und die Traversen 36 und 38 an der Plastifizierschnecke 4 angebracht. Die Längen der Traversen 32 bzw. 34 und 36 bzw. 38 bestimmen den projizierten Abstand (a - b) der Abstützpunkte der Kniehebel 16, 20 bzw. 18, 22 zueinander. Der lange Kniehebelarm 16 bzw. 18 besteht vorzugsweise aus zwei Kniehebelarmen, die räumlich parallel angeordnet sind. Dadurch können sich der lange und der kurze Kniehebelarm 16 und 20 bzw. 18 und 22 kreuzen. Außerdem vereinfacht sich dadurch die Lagerung des langen Kniehebelarms 16 bzw. 18 an der Traverse 32 bzw. 34, wobei auf die Lager 40 bzw. 42 auftretende Kräfte sich gegenseitig aufheben. Ferner verteilt sich die Belastung des langen Kniehebelarmes 16 bzw. 18 auf zwei räumlich parallel geführte Kniehebelarme.

Durch die Anordnung und die Wahl geeigneter Längenverhältnisse der Kniehebel wird der Kraftverlauf dem Kraftbedarf des Einspritzvorganges angepaßt, wobei die Kraft von einem handelsüblichen Vorschubantrieb aufgebracht werden kann. Das Übersetzungsverhältnis $i_K$ des Kniehebels bzw. das Gesamtübersetzungsverhältnis $i_G$ (Kniehebel mit Zusatzgetriebe) reicht beispielsweise von etwa 2,5 zu Beginn des Einspritzvorganges bis zu 10 am Ende bzw. während der Nachdruckphase. Dadurch ist die mögliche Einspritzgeschwindigkeit zuerst hoch und fällt dann bis auf ungefähr ein Drittel ab. Es wird ein besseres Kraft-/Geschwindigkeitsverhältnis gegenüber eines direktumsetzenden elektromechanischen Vorschubantriebes erzeugt. Wegen der hohen Steifigkeit des Systems kann der Prozeß genauer gesteuert werden als bei den hydraulischen Vorschubantrieben.

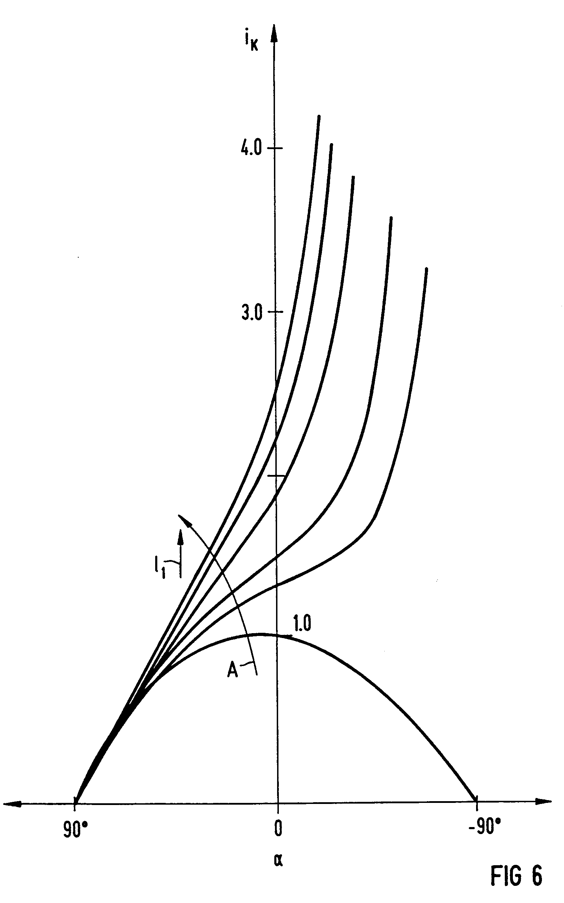

In der Figur 5 ist die Geometrie eines Kniehebels 16, 20 des Zweifachkniehebels 8 dargestellt. Für den Kniehebel 16, 20 gilt

$$F_A = F_{A1} + F_{A2}$$

und mit

$$F_{A1} = \frac{F_S}{2} \cdot \tan\alpha$$

und

$$F_{A2} = \frac{F_S}{2} \cdot \tan\beta$$

wird dann

$$F_A = \frac{F_S}{2}(\tan\alpha + \tan\beta) \qquad\qquad (1)$$

sowie

$$\sin\beta = \frac{(a-b) - l_2 \sin\alpha}{l_1}$$

der zugehörige Verschiebeweg s beträgt

$$S = S_1 + S_2$$

und da

$$S_1 = l_1 - l_1 \cdot \cos \beta$$

und

$$S_2 = l_2 \cdot \cos\alpha$$

ist, ergibt sich für den Verschiebeweg s

$$S_1 = l_1(l-\cos\beta) + l_2\cos\alpha$$

bzw.

$$S = l_1\left(1 - \sqrt{1- \left(\frac{(a-b)-l_2\sin\alpha}{l_1}\right)^2}\right) + l_2\cos\alpha$$

Das Übersetzungsverhältnis $i_K$ des Zweifachkniehebels 8 erhält man aus

$$i_K(s) = \frac{F_{aus}}{F_{ein}} = \frac{F_s(s)}{2F_A(s)} = \frac{1}{\tan\alpha + \tan\beta} = \frac{V_{ein}}{V_{aus}}$$

mit Gleichung (1) ist also das Übersetzungsverhältnis

$$i_K(s) = \frac{1}{\tan\alpha + \left(\frac{((a-b)-l_2\sin\alpha)}{l_1} \cdot \left(\sqrt{1-\left(\frac{(a-b)-l_2\sin\alpha}{l_1}\right)^2}\right)-1\right)} \qquad (2)$$

Damit ist die Kniehebelcharakteristik $i_K$ eine Funktion von drei unabhängigen Variablen, nämlich die Länge $l_1$ des langen Kniehebelarms 16, die Länge $l_2$ des kurzen Kniehebelarms 20 und der auf eine zur Rotationsachse r der Plastifizierschnecke 4 projizierte Abstand (a - b) der Abstützpunkte des langen und des kurzen Kniehebelarms 16 und 20 (Gelenke 40 und 42).

In den Figuren 6 bis 8 sind Kennfelder dargestellt, die angeben, wie sich die Veränderung der einzelnen Variablen (a - b), $l_1$ und $l_2$ auf den Verlauf des Übersetzungsverhältnisses $i_K$ auswirken. Aufgetragen ist dabei das Übersetzungsverhältnis $i_K$ gemäß der Gleichung (2) über den Schließwinkel $\alpha$. In der Figur 6 sind die einzelnen Verläufe der Übersetzungsverhältnisse $i_K$ in einem Diagramm über den Schließwinkel $\alpha$ aufgetragen, wobei die Variable $l_1$ sich gemäß dem Pfeil A in positiver Richtung (größer) ändern.

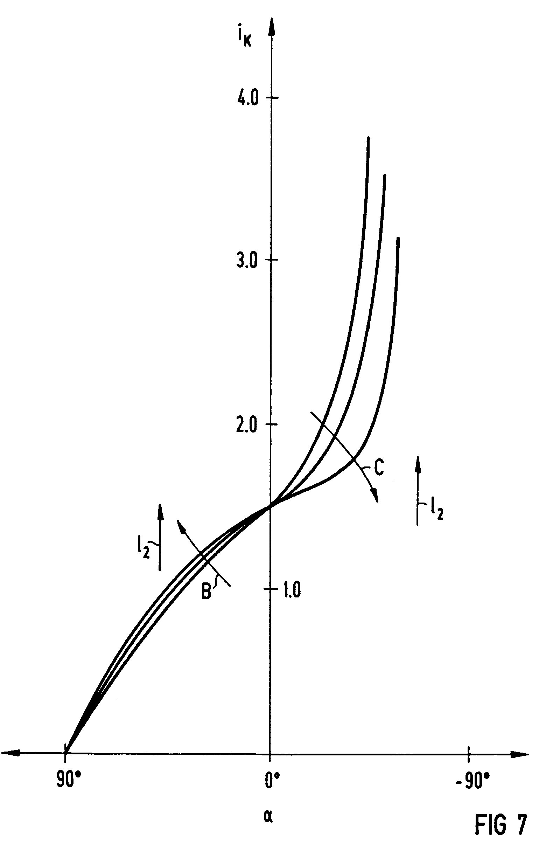

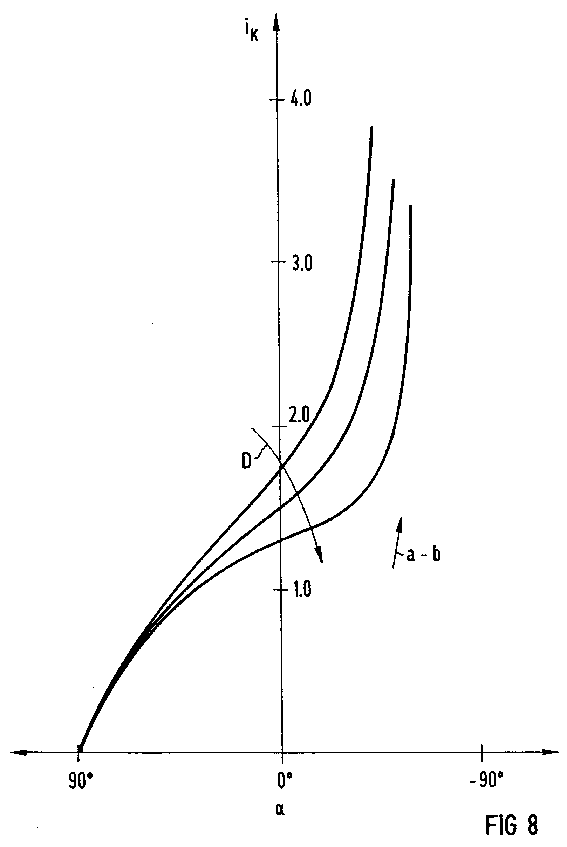

In der Figur 7 sind die einzelnen Verläufe der Übersetzungsverhältnisse $i_K$ in einem Diagramm über dem Schließwinkel $\alpha$ aufgetragen, wobei die Variable $l_1$ sich gemäß dem Pfeil A in positiver Richtung (größer) ändert. In der Figur 7 sind die einzelnen Verläufe der Übersetzungsverhältnisse $i_K$ in einem Diagramm über dem Schließwinkel $\alpha$ aufgetragen, wobei die Variable $l_2$ sich gemäß den Pfeilen B und C in positiver Richtung (größer) ändert. In Figur 8 sind die einzelnen Verläufe der Übersetzungsverhältnisse $i_K$ in einem Diagramm über dem Schließwinkel $\alpha$ aufgetragen, wobei die Variable (a - b) sich gemäß dem Pfeil D in positiver Richtung (größer) ändert.

Ausgehend von einer Plastifizierschnecke 4 mit einem Schneckendurchmesser $D_s = 40$ mm und einem Dosierweg s bzw. Verschiebeweg $s_{max} = 150$ mm und einem maximalen Einspritzdruck im Schneckenvorraum $P_{s,max} = 1.300$ bar und einer maximalen Einspritzgeschwindigkeit $v_{s,max} = 0,1$ m/s bzw. $v_{s,max} = 0,2$ m/s wird ein Drehstromservomotor 14 mit einer Nennleistung von 10,8 kW und einer maximalen Drehzahl von 6.000 U/min. ausgewählt. Dieser Drehstromservomotor 14 kann kurzzeitig bis auf das zweifache Nenndrehmoment überlastet werden. Abhängig von der Spindelsteigung s der Doppel-Kugelgewindespindel 10 ist für die maximale Motordrehzahl $n_{Mmax}$ = 6.000 U/min. die maximale Spindelmutter-Vorlaufgeschwindigkeit

$$v_s = \frac{s \ n_M}{60.000}$$

Mit diesen Maximalwerten am Kniehebelantrieb 2 und den geforderten Antriebsgeschwindigkeiten lassen sich die Grenzkurven für die Geschwindigkeitsübersetzung erstellen gemäß

$$i_{max}(s^*) = \frac{v_{an,max}}{v_{ab}(s^*)}$$

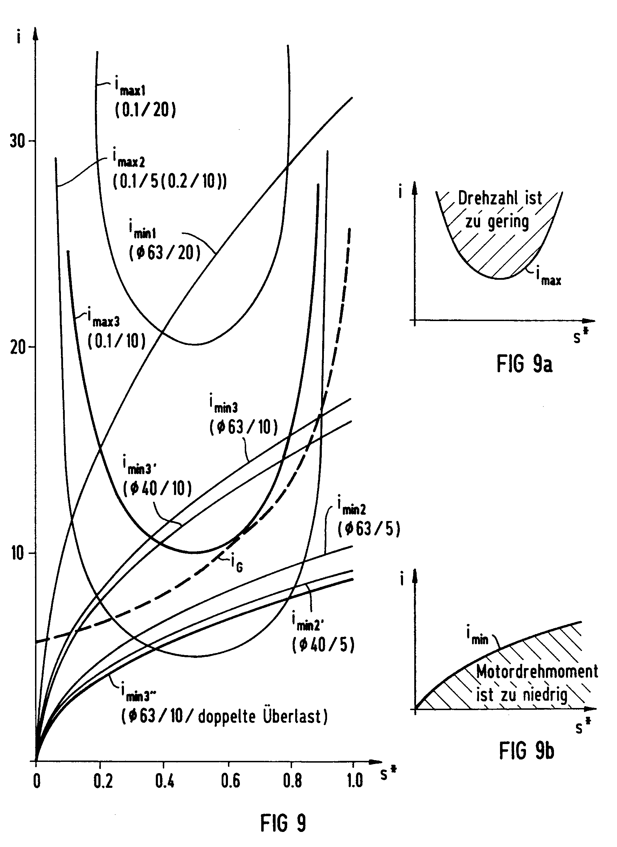

In der Figur 9 sind mehrere Geschwindigkeitsübersetzungen $i_{max}(s^*)$ in einem Diagramm über dem normierten Verschiebeweg $s^*$ aufgetragen, wobei die Spindelsteigung s der Doppel-Kugelgewindespindel 10 mit s = 5 mm/U, s = 10 mm/U und s = 20 mm/U gewählt wurde. Das Übersetzungsverhältnis $i_K(s)$ des zu dimensionierenden Kniehebelgetriebes 2 darf die Geschwindigkeitsgrenzkurven $i_{max1}$, ..., $i_{max3}$ nicht nach oben überschreiten, da sonst bei vorgegebener Antriebsgeschwindigkeit $v_{ab}(s)$ die maximale Drehzahl überschritten würde. Da

$$v_{max} = v_{max}(n_{max},s)$$

ist, ergeben sich für unterschiedliche Parameterkombinationen verschiedene Grenzkurven ($i_{max1}(0,1/20)$; $i_{max2}(0,1/5)$; $i_{max3}(0,1/10)$ gemäß Figur 9). Wegen der Übersichtlichkeit ist in der Figur 9a ein verkleinertes i/s*-Diagramm mit nur einer Grenzkurve $i_{max}$ angegeben, womit verdeutlicht werden soll, welcher Bereich nicht zulässig ist.

Ähnliche Betrachtung kann man auch für den Verlauf eines Kraftübersetzungsverhältnisses $i_{min}$ durchführen. Läßt man dabei eine mögliche Motorüberlastung vorerst unberücksichtigt, so ergeben sich die maximalen erzielbaren Axialkräfte am Spindeltrieb gemäß folgender Gleichung

$$M_A = F_A \ r_m \ \tan(\alpha + \rho)$$

mit

$$\tan\alpha = \frac{s}{\pi \cdot d_m}$$

wobei

$F_A$ = Axialbelastung
$M_A$ = Antriebsmoment
$r_m$ = $d_m/2$ = Spindelradius
$\alpha$ = Steigungswinkel
$\rho$ = Reibwinkel

in Abhängigkeit von Spindeldurchmesser $d_m$, Spindelsteigung s und Motortyp. Grenzkurven für das Kraftübersetzungsverhältnis können mit

$$i_{min}(s^*) = \frac{F(s^*)}{F_{A,max}}$$

7

berechnet werden. Die Charakteristik $i_K$ des Zweifachkniehebels 8 darf diese Grenzkurve $i_{min}$ nicht unterschreiten, da sonst die Antriebsleistung des Motors zur Aufbringung des erforderlichen Drehmomentes nicht ausreicht. Ein verkleinertes $i/s^*$-Diagramm mit einer Grenzkurve $i_{min}$ ist in der Figur 9b dargestellt, womit verdeutlicht werden soll, welcher Bereich nicht zulässig ist. Da hier

$$F_{A,max} = F_{A,max} (d_m, s, Motor)$$

sich ebenfalls für unterschiedliche Parametervariationen eine Schar von Grenzkurven $i_{min1}$, ..., $i_{min3}$ bestimmen ($i_{min1}$ ($\phi$ 63/20); $i_{min2}$ ($\phi$ 63/5); $i_{min3}$($\phi$ 63/10); $i_{min2'}$ ($\phi$ 40/5); $i_{min3'}$ ($\phi$ 40/10); $i_{min3''}$($\phi$ 63/10 / doppelte Überlast) gemäß Figur 9).

Durch die Kombination von Kraft- und Geschwindigkeitsgrenzkurven $i_{max}$ und $i_{min}$ ergeben sich die zulässigen Bereiche für den Verlauf des Übersetzungsverhältnisses $i_K$ und liefern damit eine Randbedingung für die Konstruktion.

Der Figur 9 kann entnommen werden, daß sich jeweils die obere und untere Grenzkurve $i_{max1'}$ $i_{min1}$ bzw. $i_{max2'}$ $i_{min2}$ bzw. $i_{max3}$, $i_{min3}$ für den ausgewählten Motortyp schneiden, wenn der Berechnung nur die einfache Motornennlast zugrundegelegt wird. Dies bedeutet, daß bei den vorgegebenen Belastungen immer eine Überlast in Kauf genommen werden muß unabhängig vom Motortyp. In dieser Figur 9 ist eine Kraftgrenzkurve $i_{min3''}$ ($\phi$ 63/10/doppelte Überlastung) unter der Voraussetzung einer zweifachen Motorüberlastung eingetragen. Die dazugehörige Geschwindigkeitsgrenzkurve ist die $i_{max3}(0,1/10)$. Der Verlauf des Übersetzungsverhältnisses $i_K$ ist dann so zu führen, daß er möglichst weit oberhalb der Kraftgrenzkurve $i_{min3''}$ für die zweifache Überlastung verläuft, jedoch die Grenzkurve $i_{max3}$ für die Maximalgeschwindigkeit aber noch nicht schneidet. Die Drehzahl stellt aufgrund der Motoreigenschaften eine feste Schranke dar, die dann anfallenden Kräfte müssen über eine Motorüberlastung abgefangen werden. In der Figur 9 ist das Gesamtübersetzungsverhältnis $i_G$ mittels einer unterbrochenen Linie dargestellt. Aus den dazugehörigen Grenzkurven $i_{max3}$ und $i_{min3''}$ ist zu entnehmen, daß die Doppel-Kugelgewindespindel eine Steigung von 10 mm/U aufweist. Die Gesamtübersetzung gilt von 6 bis 20 entlang des Verschiebeweges s bzw. normierten Weges $s^*$. Da eine derartige Übersetzung von einem Kniehebelsystem alleine nicht aufgebracht werden kann, ist ein Zusatzgetriebe, beispielsweise ein Zahn-oder Riemenantrieb, vorgesehen. Durch dieses Zusatzgetriebe ist man in der Lage, die Übersetzung durch Austauschen von Riemenräder zu verändern, wodurch eine höhere maximale Einspritzgeschwindigkeit erzielt werden kann, vorausgesetzt, daß in der Einspritzphase die Leistungsreserven den Antriebes noch nicht ausgeschöpft sind.

Die notwendige Spindellänge errechnet sich gemäß folgender Gleichung

$$l_{Sp} = l_1 (|\sin\beta_1| + |\sin\beta_2|)$$

mit

$$\sin\beta_1 = \frac{(a-b) - l_2\sin(+30°)}{l_1}$$

und

$$\sin\beta_2 = \frac{(a-b) - l_2\sin(-30°)}{l_1}$$

zu

$$l_{Sp} = 600 \text{ mm}.$$

Als Spindeldurchmesser $d_m$ wird ein Wert größer 50 mm angenommen. Wird die Spindel stark überdimensioniert, geht in der Beschleunigungsphase zuviel Motorleistung für die Überwindung der höheren Massenträgheitsmomente verloren. Unter der Voraussetzung einer beidseitigen Lagerung ist der Wert des

8

EP 0 447 570 B1

Korrekturfaktors (kritische Drehzahl) $f_{Kr}$ gleich Eins.

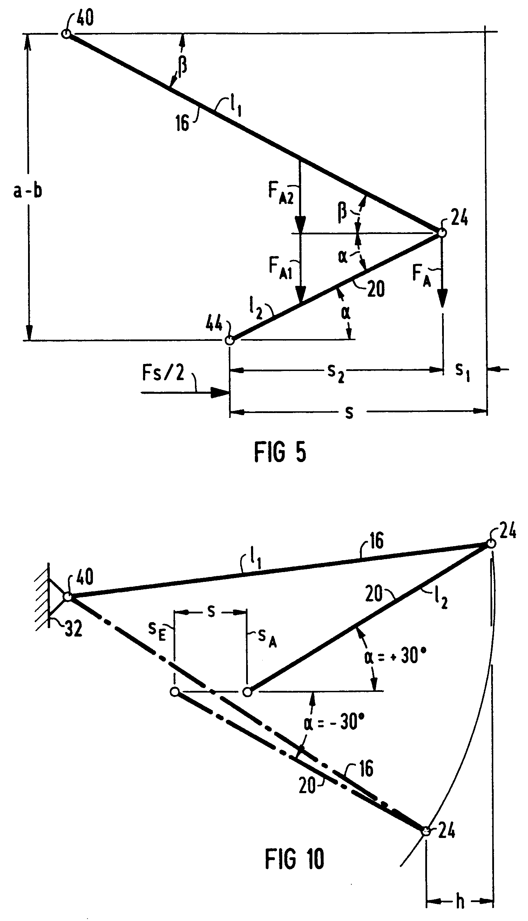

In Figur 10 ist der Hub h des verschiebbaren Komplexes Drehstromservomotor 14 - Getriebe - Gewindespindel 10 dargestellt. Am Anfang des Verschiebeweges $s_A$ befindet sich der lange Kniehebelarm 16 fast in gestreckter Lage und der kurze Kniehebelarm 20 schließt mit dem Verschiebeweg s einen Schließwinkel $\alpha$ = + 30° ein. Am Ende des Verschiebeweges $s_E$ schließt der kurze Kniehebelarm 20 mit dem Verschiebeweg s einen Schließwinkel $\alpha$ = -30° ein. Auf dem Verfahrweg von $s_A$ nach $s_E$ bewegt sich das Gelenk 24 des Kniehebels auf eine Kreisbahn mit einem Radius gleich der Länge $l_1$ des langen Kniehebelarms 16 um das Lager 40 in der Traverse 32. Der Hub h bzw. die translatorische Verschiebung des Komplexes Drehstromversomotor 14 - Zusatzgetriebe - Gewindespindel 10 kann gemäß folgender Gleichung

$$h = l_1(l-|\cos\beta_2|)$$

mit

$$\beta_2 = \text{arc sin} \frac{(a-b)-l_2\sin(-30°)}{l_1}$$

berechnet werden.

Bei einer Ausführung des erfindungsgemäßen Zweifachkniehebels 8 ist als Länge $l_1$ des langen Kniehebels 16 bzw. 18 1200 mm und als Länge $l_2$ des kurzen Kniehebels 20 bzw. 22 900 mm gewählt worden. Der projizierte Abstand (a - b) der Abstützpunkte der Kniehebel 16 und 20 bzw. 18 und 22 ist 150 mm und der Wert des Schließwinkels beträgt -5°≤ $\alpha$ ≤ 35°. Als Drehstromservomotor 14 ist ein handelsüblicher Servomotor mit einer Nennleistung von 10,8 kW und einer maximalen Drehzahl von 6.000 U/min. ausgewählt worden.

**Patentansprüche**

1. Elektromechanischer Vorschubantrieb (2) für eine Plastifizierschnecke (4) einer Kunststoffspritzgießmaschine, bestehend aus einem Elektromotor und einem mechanischen Umsetzungsgetriebe, **dadurch gekennzeichnet,** daß als mechanisches Umsetzungsgetriebe ein ungleichförmiger Zweifachkniehebel (8) mit einem Übersetzungsverhältnis ($i_K$)

$$i_K(s) = \frac{1}{\tan\alpha + \left(\frac{((a-b)-l_2\sin\alpha)}{l_1} \cdot \left(\sqrt{1-\left(\frac{(a-b)-l_2\sin\alpha}{l_1}\right)^2}\right)^{-1}\right)}$$

wobei

(a-b) = projizierter Abstand der Abstützpunkte der Kniehebel zueinander,
$\alpha$ = Schliebwinkel
$l_1$ = Länge des langen Kniehebelarms (16, 18),
$l_2$ = Länge des kurzen Kniehebelarms (20, 22)

vorgesehen ist, deren lange Kniehebelarme (16, 18) sich am Gehäuse der Kunststoffspritzgießmaschine und deren kurze Kniehebelarme (20, 22) sich an der Plastifizierschnecke (4) abstützen und die beiden Gelenke (24, 26) jeweils über eine Spindelmutter (28, 30) mit einer mittels eines Tragrahmens (12) beidseitig gelagerten Doppel-Kugelgewindespindel (10) mit gegenläufigem Gewinde verbunden sind, wobei die Doppel-Kugelgewindespindel (10) mittels eines Drehstromservomotors (14) angetrieben wird.

2. Elektronischer Vorschubantrieb (2) nach Anspruch 1, **dadurch gekennzeichnet,** daß das Übersetzungsverhältnis ($i_K(s)$) des Zweifachkniehebels (8) in Abhängigkeit eines Verschiebeweges (s) durch ein Geschwindigkeitsübersetzungsverhältnis ($i_{max}(s^*)$) und durch ein Kraftübersetzungsverhältnis ($i_{min}(s^*)$)

begrenzt ist.

3.  Elektromechanischer Vorschubantrieb (2) nach Anspruch 1, **dadurch gekennzeichnet,** daß zwischen der Doppel-Kugelgewindespindel (10) und dem Drehstromservomotor (14) ein zusätzliches Getriebe vorgesehen ist.

4.  Elektromechanischer Vorschubantrieb (2) nach Anspruch 1, **dadurch gekennzeichnet,** daß der Drehstromservomotor (14) am Tragrahmen (12) befestigt ist.

5.  Elektromechanischer Vorschubantrieb (2) nach Anspruch 1, **dadurch gekennzeichnet,** daß der Tragrahmen (12) in Richtung des Verschiebeweges (s) der Plastifizierschnecke (4) verschiebbar gelagert ist.

6.  Elektromechanischer Vorschubantrieb (2) nach Anspruch 1, **dadurch gekennzeichnet,** daß als Drehstromservomotor (14) ein Motor mit hoher Drehzahl, geringem Gewicht, geringem Massenträgheitsmoment und hoher zulässiger Überlastung vorgesehen ist.

7.  Elektromechanischer Vorschubantrieb (2) nach Anspruch 1, **dadurch gekennzeichnet,** daß jeweils der lange Kniehebelarme (16, 18) des Zweifachkniehebels (8) aus zwei räumlich parallel beabstandeten Kniehebelarmen besteht.

8.  Elektromechanischer Vorschubantrieb (2) nach Anspruch 3, **dadurch gekennzeichnet,** daß als zusätzliches Getriebe ein Riementrieb vorgesehen ist.

9.  Elektromechanischer Vorschubantrieb (2) nach Anspruch 5, **dadurch gekennzeichnet**, daß die Verschiebung (h) des Tragrahmens (12) durch folgende Gleichung bestimmt ist:

$$h = l_1 (l - |\cos\beta_2|)$$

mit

$$\beta_2 = \text{arc sin } \frac{(a-b) - l_2 \sin(-30°)}{l_1}$$

10. Elektromechanischer Vorschubantrieb (2) nach Anspruch 1, **dadurch gekennzeichnet,** daß die Spindellänge ($l_{Sp}$) der Doppel-Kugelgewindespindel (10) in Abhängigkeit der Geometrie des Zweifachkniehebels (8) gemäß folgender Gleichung:

$$l_{Sp} = l_1 (|\sin\beta_1| + |\sin\beta_2|)$$

mit

$$\sin\beta_1 = \frac{(a-b) - l_2 \sin(+30°)}{l_1}$$

und

$$\sin\beta_2 = \frac{(a-b) - l_2\sin(-30°)}{l_1}$$

bestimmbar ist.

## Claims

1. Electromechanical feed drive (2) for a plastifying spindle (4) of a plastics injection moulding machine, consisting of an electric motor and a mechanical conversion gear unit, characterised in that an unequal twin toggle lever (8) is provided as a mechanical conversion gear unit having a transmission ratio ($i_k$)

$$i_K(s) = \frac{1}{\tan\alpha + \left(\frac{((a-b)-l_2\sin\alpha)}{l_1} \cdot \left(\sqrt{1-\left(\frac{(a-b)-l_2\sin\alpha}{l_1}\right)^2}\right)^{-1}\right)}$$

where

(a-b) = projected spacing of the support points of the toggle levers relative to each other,
$\alpha$ = closing angle,
$l_1$ = length of the long toggle lever arm (16, 18),
$l_2$ = length of the short toggle lever arm (20, 22),
the long toggle lever arms (16, 18) thereof are supported on the housing of the plastics injection moulding machine and the short toggle lever arms (20, 22) thereof are supported on the plastifying spindle (4) and the two joints (24, 26) are each connected, by way of a spindle nut (28, 30), with a double ball groove threaded spindle (10) mounted on both sides by means of a supporting frame (12) and having oppositely directed thread, with the double ball groove threaded spindle (10) being driven by means of a three-phase servomotor (14).

2. Electronic (sic) feed drive (2) according to claim 1, characterised in that the transmission ratio ($i_K(s)$) of the twin toggle lever (8) is limited as a function of a displacement path (s) by a speed transmission ratio ($i_{max}(s^*)$) and by a power transmission ratio ($i_{min}(s^*)$).

3. Electromechanical feed drive (2) according to claim 1, characterised in that an additional gear unit is provided between the double ball groove threaded spindle (10) and the three-phase servomotor (14).

4. Electromechanical feed drive (2) according to claim 1, characterised in that the three-phase servomotor (14) is secured to the supporting frame (12).

5. Electromechanical feed drive (2) according to claim 1, characterised in that the supporting frame (12) is mounted so as to be displaceable in the direction of the displacement path (s) of the plastifying spindle (4).

6. Electromechanical feed drive (2) according to claim 1, characterised in that a motor with high speed, low weight, low mass moment of inertia and high permissable overload is provided as a three-phase servomotor (14).

7. Electromechanical feed drive (2) according to claim 1, characterised in that in each case the long toggle lever arm (16, 18) of the twin toggle lever (8) consists of two toggle lever arms which are spatially spaced apart in parallel.

8. Electromechanical feed drive (2) according to claim 3, characterised in that a belt drive is provided as an additional gear unit.

11

9. Electromechanical feed drive (2) according to claim 5, characterised in that the displacement (h) of the supporting frame (12) is determined by the following equation:

$$h = l_1(1-|\cos\beta_2|)$$

with

$$\beta_2 = \arc \sin \frac{(a-b)-l_2\sin(-30°)}{l_1} \, .$$

10. Electromechanical feed drive (2) according to claim 1, characterised in that the spindle length ($l_{Sp}$) of the double ball groove threaded spindle (10) can be determined as a function of the geometry of the twin toggle lever (8) according to the following equation:

$$l_{Sp} = l_1 (|\sin\beta_1| + \sin\beta_2|)$$

with

$$\sin\beta_1 = \frac{(a-b) - l_2\sin(+30°)}{l_1}$$

and

$$\sin\beta_2 = \frac{(a-b) - l_2\sin(-30°)}{l_1} \, .$$

## Revendications

1. Dispositif d'entraînement d'avance électromécanique (2) pour une vis de plastification (4) d'une machine de moulage de matière plastique par injection, constitué d'un moteur électrique et d'une transmission mécanique démultiplicatrice, caractérisé par le fait qu'on utilise comme transmission mécanique démultiplicatrice deux leviers coudés (8) à bras inégaux, fournissant un rapport de démultiplication ($i_K$),

$$i_K(s) = \frac{1}{\tan\alpha + \left(\frac{((a-b)-l_2\sin\alpha)}{l_1} \cdot \left(\sqrt{1-\left(\frac{(a-b)-l_2\sin\alpha}{l_1}\right)^2}\right)-1\right)}$$

avec

(a-b) = distance projetée entre les points d'appui du levier coudé,
$\alpha$ = angle de fermeture,
$l_1$ = longueur du bras long (16,18) du levier coudé,
$l_2$ = longueur du bras court (20,22) du levier coudé.
et dont les bras longs (16,18) prennent appui sur le corps de la machine de moulage de matière

EP 0 447 570 B1

plastique par injection et dont les bras courts (20,22) prennent appui sur la vis de plastification (4), et dont les deux articulations (24,26) sont reliées, chacune par l'intermédiaire d'un écrou de broche (28,30), à une broche filetée (10) double à billes montée des deux côtés au moyen d'un cadre de support (12) et possédant des filetages tournant dans des sens opposés, la broche filetée (10) double étant entraînée au moyen d'un servomoteur à courant triphasé (14).

2. Dispositif d'entraînement d'avance électronique (2) suivant la revendication 1, caractérisé par le fait que le rapport de transmission ($i_K(s)$) des deux leviers coudés (8) est limité, en fonction d'un trajet de déplacement (s), par un rapport de transmission de vitesse ($i_{max}(s^*)$) et par un rapport de transmission de force ($i_{min}(s^*)$).

3. Dispositif d'entraînement d'avance électromécanique (2) suivant la revendication 1, caractérisé par le fait qu'une transmission supplémentaire est prévue entre la broche filetée (10) double à billes et le servomoteur à courant triphasé (14).

4. Dispositif d'entraînement d'avance électromécanique (2) suivant la revendication 1, caractérisé par le fait que le servomoteur à courant triphasé (14) est fixé au cadre de support (12).

5. Dispositif d'entraînement d'avance électromécanique (2) suivant la revendication 1, caractérisé par le fait que le cadre de support (12) est monté mobile dans la direction du trajet de déplacement (s) de la vis de plastification (4).

6. Dispositif d'entraînement d'avance électromécanique (2) suivant la revendication 1, caractérisé par le fait qu'il est prévu, comme servomoteur à courant triphasé (14), un moteur ayant une grande vitesse de rotation, un poids petit, un petit moment d'inertie et une grande surcharge admissible.

7. Dispositif d'entraînement d'avance électromécanique (2) suivant la revendication 1, caractérisé par le fait que chacun des bras longs(16,18) des deux leviers coudés (8) est constitué de deux bras parallèles et distants dans l'espace.

8. Dispositif d'entraînement d'avance électromécanique (2) suivant la revendication 3, caractérisé par le fait qu'il est prévu, comme transmission supplémentaire, un dispositif d'entraînement à courroie.

9. Dispositif d'entraînement d'avance électromécanique (2) suivant la revendication 5, caractérisé par le fait que le décalage (h) du cadre de support (12) est déterminé par la relation suivante :

$$h = l_1(1-|\cos\beta_2|)$$

avec

$$\beta_2 = \arcsin \frac{(a-b)-l_2\sin(-30°)}{l_1}$$

10. Dispositif d'entraînement d'avance électromécanique (2) suivant la revendication 1, caractérisé par le fait que la longueur ($l_{sp}$) de la broche filetée (10) double à billes peut être déterminée en fonction de la géométrie des deux leviers coudés (8) conformément à la relation suivante :

$$l_{Sp} = l_1 (|\sin\beta_1| + |\sin\beta_2|)$$

avec

13

$$\sin\beta_1 = \frac{(a-b) - l_2\sin(+30°)}{l_1}$$

et

$$\sin\beta_2 = \frac{(a-b) - l_2\sin(-30°)}{l_1} \; .$$

FIG 1

EP 0 447 570 B1

v

v(max)

0

te

tn

FIG 2

F
[p]

F(max) [p(max)]

0

te

tn

FIG 3

s

0

te

tn

FIG 4

FIG 6

FIG 7

FIG 8

FIG 9

FIG 9a

FIG 9b

FIG 5

FIG 10